# EUROPÄISCHE PATENTSCHRIFT

(11) **EP 0 451 448 B1**
(45) Veröffentlichungstag und Bekanntmachung des Hinweises auf die Patenterteilung: **22.09.1993**
(21) Anmeldenummer: 91101244.1
(22) Anmeldetag: 31.01.1991
(51) Int. Cl.: A47J 31/60, A47J 31/40, A47J 31/00

(54) **Kaffeemaschine**
Coffee machine
Machine à café

(30) Priorität: 31.03.1990 DE 4010462
(43) Veröffentlichungstag der Anmeldung: 16.10.1991
(73) Patentinhaber: Melitta Haushaltsprodukte GmbH & Co. Kommanditgesellschaft, D-32371 Minden (DE)
(72) Erfinder: Schmalkuche, Jens, W-4803 Steinhagen (DE)
(74) Vertreter: Stracke, Alexander, Dipl.-Ing.

(56) Entgegenhaltungen:
- BE-A- 641 878
- BE-A- 646 335
- DE-A- 2 058 741
- DE-C- 3 810 143
- US-A- 3 064 553
- US-A- 4 651 632

## Beschreibung

Die vorliegende Erfindung betrifft eine Kaffeemaschine mit einer Brühkammer, die eine Einfüllventilöffnung, einen Einfüllstutzen, eine Ablaufventilöffnung zu einem Ablauf, eine Öffnung zu einer Kaffeeleitung und einen Brühwasserzulauf aufweist und in welcher ein Trägersieb sowie ein den Brühvorgang steuernder Ventilkolben angeordnet sind, wobei das Trägersieb einen Auffangraum für Kaffeegetränk und die Öffnung der Kaffeeleitung von der Brühkammer trennt und oberhalb des Trägersiebes und parallel zum Trägersieb verlaufend eine der Ablaufventilöffnung gegenüberliegende Reinigungswasseröffnung in die Brühkammer einmündet.

Eine Kaffeemaschine der gattungsgemäßen Art ist aus der DE-PS 38 10 143 bekannt.

Die Reinigungswasseröffnung dient dazu, die Brühkammer nach einem Brühvorgang durch das Einspülen von Reinigungswasser gründlich reinigen zu können.

Bei der Kaffeemaschine nach der DE-PS 38 10 143 liegt der Ventilkolben außerhalb der Grundfläche des Trägersiebes, das gleiche gilt für die Ablaßventilöffnung, durch die bei einem Spülvorgang das Spülwasser und das abgespülte Kaffeemehl austreten können.

Sowohl bei der Konstruktion nach der DE-PS 38 10 143 wie auch bei vergleichbaren, ähnlichen Konstruktionen findet lediglich ein Spülvorgang im Bereich oberhalb des Trägersiebes statt.

Der vorliegenden Erfindung liegt die Aufgabe zugrunde, eine Kaffeemaschine der gattungsgemäßen Art so zu gestalten, daß bei geringem konstruktivem Aufwand eine gründlichere Reinigung insbesondere des Trägersiebes ermöglicht wird.

Diese Aufgabe wird erfindungsgemäß dadurch gelöst, daß unterhalb des Trägersiebes eine nach oben gerichtete Gegenstromspülvorrichtung angeordnet ist.

Durch diese Maßnahme wird erreicht, daß zusätzlich zur bekannten Spülung die Möglichkeit eröffnet wird, daß Trägersieb entgegen der Durchlaufrichtung der Kaffeebrühe mit Spülwasser zu beaufschlagen, wordurch eine erheblich gründlichere Reinigung insbesondere des Trägersiebes erreicht wird. Es hat sich nämlich gezeigt, daß sich in den Poren des Trägersiebes Kaffeegranulat festsetzen kann und ein Lösen dieses Kaffeegranulates durch eine ausschließliche Spülung parallel zur Oberfläche das Trägersiebes nicht zuverlässig möglich ist. Durch die Gegenstromspüleinrichtung hingegen wird das in die Poren des Trägersiebes eingelagerte Kaffeegranulat nach oben angehoben und kann dann parallel zur Oberfläche des Trägersiebes abgespült werden.

Die erheblich gründlichere Reinigung des Trägersiebes bringt den Vorteil mit sich,daß die nutzbare Filterfläche des Trägersiebes auch nach längerer Betriebsdauer der Kaffeemaschine praktisch nicht verkleinert oder eingeschränkt wird, so daß für jeden Brühvorgang praktisch immer die gleiche, nutzbare Filterfläche zur Verfügung steht. Somit sind gleichmäßig gute Kaffeequalitäten auch über längere Betriebszeiträume zu erzielen.

Weitere Merkmale der Erfindung sind Gegenstand von Unteransprüchen.

Ausführungsbeispiele der Erfindung sind in der beigefügten Zeichnung dargestellt und werden im folgenden näher beschrieben. Es zeigen:
- Fig. 1: ein schematisch dargestelltes Funktionsschaubild einer erfindungsgemäßen Kaffeemaschine
- Fig. 2: eine Draufsicht auf ein Trägersieb einer im übrigen der Fig. 1 entsprechenden Kaffeemaschine nach einem weiteren Ausführungsbeispiel der Erfindung.
- Fig. 3: einen stark vergrößert dargestellten Teilschnitt durch ein Trägersieb einer erfindungsgemäßen Kaffeemaschine.

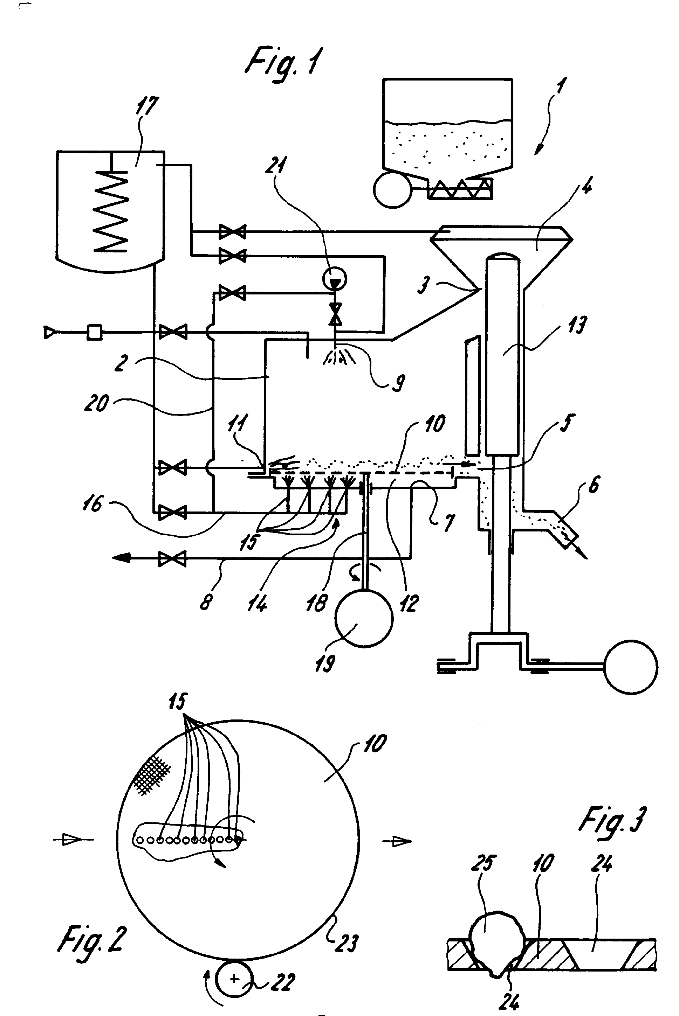

Die in Fig. 1 dargestellte, insgesamt mit dem Bezugszeichen 1 bezeichnete Kaffeemaschine ist mit einer Brühkammer 2 ausgestattet, die eine Einfüllventilöffnung 3, einen Einfüllstutzen 4, eine Ablaufventilöffnung 5 zu einem Ablauf 6, eine Öffnung 7 zu einer Kaffeeleitung 8 und einen Brühwasserzulauf 9 aufweist.

Innerhalb der Brühkammer 2 ist ein Trägersieb 10 angeordnet. Oberhalb dieses Trägersiebes 10 ist eine der Ablaufventilöffnung 5 gegenüberliegende und parallel zum Trägersieb 10 verlaufende Reinigungswasseröffnung 11 angeordnet.

Das Trägersieb 10 trennt einen Auffangraum 12 und die Öffnung 7 der Kaffeeleitung 8 von der Brühkammer 2.

Über einen außerhalb der Grundfläche des Trägersiebes 10 angeordneten Ventilkolben 13 wird der Brühvorgang in bekannter Weise gesteuert.

Unterhalb des Trägersiebes 10 ist eine ganz allgemein mit dem Bezugszeichen 14 bezeichnete, nach oben gerichtete Gegenstromspülvorrichtung angeordnet.

Diese Gegenstromspülvorrichtung besteht vorteilhafterweise aus mehreren Druckwasser-Spüldüsen 15, die an eine gemeinsame Druckwasserleitung 16 angeschlossen sind. Die Druckwasserleitung 16 wird gespeist aus einem Druckbehälter mit dem Bezugszeichen 17.

Das vorzugsweise kreisrund gestaltete Trägersieb 10 ist beim Ausführungsbeispiel gemäß Fig. 1 mittig an einer Achse 18 befestigt, welche über einen Motor 19 rotierend antreibbar ist.

Die Druckwasser-Spüldüsen sind - in der Projektionsebene des Trägersiebes 10 gesehen - in einer geraden Linie verlaufend angeordnet, wobei sich diese Linie vom äußeren Rand des Trägersiebes 10 bis zu dessen Mittelpunkt erstreckt. Außerdem verläuft die Linie der Druckwasser-Spüldüsen 15 in einer Flucht mit der oberhalb des Trägersiebes 10 angeordneten Reinigungswasseröffnung 11 in Richtung der Ablaufventilöffnung 5.

In die Druckwasserleitung 16 mündet eine Druckluftleitung 20 ein, die andererseits an eine Pumpe 21 angeschlossen ist. Über diese Druckluftleitung 20 kann bei Bedarf Druckluft zusätzlich in die Druckwasserleitung 16 eingespeist werden.

Soll nun nach einem Brühvorgang der Bereich des Trägersiebes 10 gereinigt werden, so wird der Ventilkolben 13 in die aus Fig. 1 ersichtliche Stellung gebracht. Dabei ist die Ablaufventilöffnung 5 wie ersichtlich freigegeben. Nun wird sowohl die Reinigungswasseröffnung 11 freigegeben wie auch die beschriebene Gegenstromspülvorrichtung 14 aktiviert. Das Trägersieb 10 wird somit einerseits parallel zu seiner Oberfläche gereinigt und andererseits auch von Reinigungswasser von seiner Unterseite her gesehen durchtreten. Gleichzeitig wird durch Einschalten des Motors 19 das Trägersieb 10 gedreht, so daß eine Durchspülung der gesamten Grundfläche des Trägersiebes 10 von seiner Unterseite her gesehen eintritt.

Eine äußerst gründliche und vollständige Reinigung des Trägersiebes 10 ist die Folge dieser Maßnahmen, da nicht nur auf dem Trägersieb 10 aufliegende Verunreinigungen abgespült werden, sondern auch evtl. in die Poren des Trägersiebes 10 eingedrungene Verunreinigungen gelöst werden, und zwar deshalb, weil diese Poren von unten her gesehen mit Spülwasser durchspült werden. Die dabei abgelösten oder angehobenen Verunreinigungen werden wieder von der durch die Reinigungswasseröffnung 11 eintretende Spülflüssigkeit mitgenommen und über die Ablaufventilöffnung 5 und den Ablauf 6 abgespült.

In Fig. 2 ist gezeigt, daß ein Trägersieb 10 auch über ein Antriebsritzel 22 antreibbar ist, wobei dieses Antriebsritzel 22 mit einer entsprechenden Verzahnung am Umfang 23 des Trägersiebes 10 in Eingriff steht.

Aus Fig. 2 geht wiederum hervor, daß unterhalb des Trägersiebes 10 mehrere Druckwasser-Spüldüsen 15 als Gegenstromspülvorrichtung angeordnet sind. Diese verlaufen im dargestellten Ausführungsbeispiel wieder in einer geraden Linie, die sich vom äußeren Rand des Trägersiebes 10 bis zu dessen Mittelpunkt erstreckt.

Es wäre insbesondere bei der Konstruktion gemäß Fig. 2 aber auch vorstellbar und vorteilhaft, lediglich eine Druckwasser-Spüldüse 15 einzusetzen, und zwar dann im Zentrum des Trägersiebes 10. In diesem Falle ist die Druckwasser-Spüldüse 15 so zu gestalten, daß zumindest eine vollständige, radiale Linie vom Zentrum bis zum Rand des Trägersiebes 10 mit Druckwasser beaufschlagt werden kann. Vorstellbar ist auch, daß lediglich eine, zentrisch angeordnete Druckwasser-Spüldüse 15 so gestaltet ist, daß das Trägersieb ganzflächig mit Druckwasser beaufschlagt wird.

Fig. 3 zeigt eine stark vergrößerte Darstellung eines Teilschnittes durch ein Trägersieb 10 und macht deutlich, daß in den vergleichsweise feinen Poren 24 dieses Trägersiebes 10 beispielsweise Kaffeegranulat 25 abgelagert werden kann, welches durch eine ausschließliche Spülung parallel zur Oberfläche des Trägersiebes 10 nicht entfernt werden kann. Durch die Gegenstromspülung von der Unterseite des Trägersiebes 10 her gesehen hingegen wird derartiges Kaffeegranulat 25 oder andere Verunreinigungen wirksam aus den Poren 24 entfernt.

Durch die Möglichkeit, in die Druckwasserleitung 16 zusätzlich Druckluft einspeisen zu können, wird der Reinigungseffekt zusätzlich gefördert, da hierbei ein Luft-Wasser-Gemisch mit einem entsprechenden Sprudeleffekt entsteht.

Im Rahmen der vorliegenden Erfindung ist es selbstverständlich auch denkbar, den Druckwasser-Spüldüsen 15 unmittelbar Druckluft beizumischen, vorteilhaft ist es aber, hierfür die gemeinsame Druckwasserleitung 16 zu nutzen.

Im Rahmen der vorliegenden Erfindung ist es auch denkbar, das Trägersieb 10 ortsfest bzw. nicht drehbar zu lagern und stattdessen die Druckwasser-Spüldüsen 15 auf einem im Zentrum des Trägersiebes 10 drehbar gelagerten Trägerarm anzuordnen. In diesem Falle würden dann die Spüldüsen 15 während des Reinigungsvorganges unterhalb der Fläche des Trägersiebes 10 rotieren.

## Patentansprüche

1. Kaffeemaschine mit einer Brühkammer, die eine Einfüllventilöffnung, einen Einfüllstutzen, eine Ablaufventilöffnung zu einem Ablauf, eine Öffnung zu einer Kaffeeleitung und einen Brühwasserzulauf aufweist und in welcher ein Trägersieb sowie ein den Brühvorgang steuernder Ventilkolben angeordnet sind, wobei das Trägersieb einen Auffangraum für Kaffeegetränk und die Öffnung der Kaffeeleitung von der Brühkammer trennt und oberhalb des Trägersiebes und parallel zum Trägersieb verlaufend eine der Ablaufventilöffnung gegenüberliegende Reinigungswasseröffnung in die Brühkammer einmündet, **dadurch gekennzeichnet,** daß unterhalb des Trägersiebes (10) eine nach oben gerichtete Gegenstromspülvorrichtung (14) angeordnet ist.

2. Kaffeemaschine nach Anspruch 1, dadurch gekennzeichnet, daß die Gegenstromspülvorrichtung (14) aus mehreren Druckwasser-Spüldüsen (15) besteht.

3. Kaffeemaschine nach Anspruch 1, dadurch gekennzeichnet, daß die Gegenstromspülvorrichtung aus einer vorzugsweise im Zentrum des Trägersiebes (10) angeordneten Druckwasser-Spüldüse (15) besteht.

4. Kaffeemaschine nach Anspruch 2, dadurch gekennzeichnet, daß alle Druckwasser-Spüldüsen (15) an eine gemeinsame Druckwasserleitung (16) angeschlossen sind.

5. Kaffeemaschine nach Anspruch 2, 3 oder 4, dadurch gekennzeichnet, daß an die Druckwasserleitung (16) oder an jede Druckwasser-Spüldüse (15) eine Druckluftleitung (20) angeschlossen ist.

6. Kaffeemaschine nach einem oder mehreren der Ansprüche 2, 4 oder 5, dadurch gekennzeichnet, daß die Druckwasser-Spüldüsen (15) - in der Projektionsebene des Trägersiebes (10) gesehen - in einer geraden Linie verlaufend angeordnet sind, wobei sich die Linie der Druckwasser-Spüldüsen (15) vom äußeren Rand des Trägersiebes (10) bis zu dessen Mittelpunkt erstreckt und daß das Trägersieb (10) um seinen Mittelpunkt rotierbar antreibbar ist.

7. Kaffeemaschine nach Anspruch 6, dadurch gekennzeichnet, daß das Trägersieb (10) in seinem Mittelpunkt an einer über einen Motor (19) antreibbaren Achse (18) befestigt ist.

8. Kaffeemaschine nach Anspruch 3 oder 6, dadurch gekennzeichnet, daß das Trägersieb (10) an seinem Umfang (23) mit einer Verzahnung versehen und über ein mit dieser Verzahnung kämmendes Antriebsritzel (22) antreibbar ist.

9. Kaffeemaschine nach einem oder mehreren der Ansprüche 6 bis 8, dadurch gekennzeichnet, daß die Druckwasser-Spüldüsen (15) mit der Verbindungslinie zwischen der Reinigungswasseröffnung (11) und der Ablaufventilöffnung (5) fluchtend angeordnet sind.

10. Kaffeemaschine nach einem oder mehreren der Ansprüche 2, 4 oder 5, dadurch gekennzeichnet, daß die Druckwasser-Spüldüsen (15) an einem um den Mittelpunkt des Trägersiebes (10) rotierbar antreibbaren Trägerarm angeschlossen sind.

## Claims

1. Coffee machine with a brewing chamber which has a filler valve opening, a filler funnel, an outlet valve opening to a drain, an opening to a coffee line and a boiling water inlet; arranged within it, as well, are a carrier sieve and a piston valve for controlling the brewing procedure, whereby the carrier sieve separates a receiving area for the finished drink and the coffee line opening from the brewing chamber; and running above and parallel to the carrier sieve, a cleansing water opening opposite the outlet valve opening empties into the brewing chamber, **characterized by the fact that** arranged beneath the carrier sieve (10) is a countercurrent water-jet installation (14) facing upwards.

2. Coffee machine according to claim 1, characterized by the fact that the countercurrent water-jet installation (14) comprises several high-pressure water-jet nozzles (15).

3. Coffee machine according to claim 1, characterized by the fact that the countercurrent water-jet installation (14) is composed of a high-pressure water-jet nozzle (15) preferably arranged at the center of the carrier sieve (10).

4. Coffee machine according to claim 2, characterized by the fact that all of the high-pressure water-jet nozzles (15) are connected to a common pressure water line (16).

5. Coffee machine according to claim 2, 3 or 4 characterized by the fact that connected to the pressure water line (16) or to each high-pressure water-jet nozzle (15) is a compressed air line (20).

6. Coffee machine according to one or more of claims 2, 3 or 4, characterized by the fact that the high-pressure water-jet nozzles (15) - seen in the plane of projection of the carrier sieve (10) - are arranged running in a straight line, whereby the line of the high-pressure water-jet nozzles (15) stretches from the outer wall of the carrier sieve (10) to its center and that the carrier sieve (10) can be activated to rotate around its center.

7. Coffee machine according to claim 6, characterized by the fact that the carrier sieve (10) is attached at its center to an axis (18) able to be driven by a motor (19).

8. Coffee machine according to claim 3 or 6, characterized by the fact that the carrier sieve (10) is equipped on its circumference (23) with gearing and can be driven by way of a pinion (22) which is meshed with this gearing.

9. Coffee machine according to one or more of claims 6 to 8, characterized by the fact that the high-pressure water-jet nozzles (15) are arranged in alignment with the connecting line.between the cleansing water opening (11) and the outlet valve opening (5).

10. Coffee machine according to one or more of claims 2, 4 or 5, characterized by the fact that the high-pressure water-jet nozzles (15) are connected to a jib arm able to be driven in rotation around the center of the carrier sieve.

## Revendications

1. Machine à café à chambre d'ébullition, qui comporte une ouverture à soupape de remplissage, une tubulure de remplissage, une ouverture à soupape d'écoulement menant à un orifice d'écoulement ainsi qu'une ouverture menant à une conduite à café et une arrivée d'eau bouillante, et dans laquelle sont disposés un filtre support ainsi qu'un piston à soupape qui commande l'ébullition, le filtre support séparant un espace collecteur pour le café liquide et l'ouverture de la conduite à café de la chambre d'ébullition tandis qu'au-dessus du filtre support et parallèlement à celui-ci une ouverture d'eau de nettoyage opposée à l'ouverture de la soupape d'écoulement débouche dans la chambre d'ébullition, **caractérisée par le fait** **qu'**en dessous du filtre support (10) est placé un dispositif de rinçage (14) à contre-courant orienté vers le haut.

2. Machine à café selon la revendication 1, caractérisée par le fait que le dispositif de rinçage à contre-courant (14) se compose de plusieurs gicleurs de rinçage (15) à eau sous pression.

3. Machine à café selon la revendication 1, caractérisée par le fait que le dispositif de rinçage à contre-courant consiste en un gicleur de rinçage à eau sous pression (15) placé de préférence au centre du filtre support (10).

4. Machine à café selon la revendication 2, caractérisée par le fait que tous les gicleurs (15) d'eau sous pression sont raccordés à une conduite d'eau sous pression commune (16).

5. Machine à café selon la revendication 2, 3 ou 4, caractérisée par le fait qu'une conduite à air comprimé (16) est raccordée à la conduite à eau sous pression ou à chaque gicleur de rinçage à air comprimé (15)

6. Machine à café selon une ou plusieurs des revendications 2, 4 ou 5, caractérisée par le fait que les gicleurs de rinçage à eau sous pression (15) - vus dans le plan de projection du filtre support (10) - sont disposés en ligne droite, la ligne des gicleurs de rinçage (15) à eau sous pression s'étendant du bord extérieur du filtre support (10) à ce point central et que le filtre support (10) peut s'actionner en rotation autour de son centre.

7. Machine à café selon la revendication 6, caractérisée par le fait que le filtre support (10) est fixé en son centre sur un arbre pouvant être entraîné par un moteur (19).

8. Machine à café selon la revendication 3 ou 6, caractérisée par le fait que le filtre support (10) est pourvu d'un engrenage à son pourtour (23) et peut s'actionner au moyen d'un pignon d'attaque (22) en prise avec cet engrenage.

9. Machine à café selon une ou plusieurs des revendications 6 à 8, caractérisée par le fait que les gicleurs de rinçage à eau sous pression (15) sont disposés en enfilade avec la ligne de jonction entre l'ouverture d'eau de nettoyage (11) et l'ouverture de la soupape d'écoulement (5).

10. Machine à café selon une ou plusieurs des revendications 2 4 ou 5, caractérisée par le fait que les gicleurs de rinçage à eau sous pression (15) sont raccordés à un bras support pouvant s'actionner en rotation autour du centre du filtre support (10).
